# EUROPEAN PATENT APPLICATION

(11) **EP 4 751 951 A1**
(43) Date of publication of application: **03.06.2026**
(21) Application number: 25209436.2
(22) Date of filing: 17.10.2025
(51) Int. Cl.: B60J 7/16

(54) **LIFTING AND POSITIONING SYSTEM FOR A LIFTABLE TRUCK BODY ROOF**

(30) Priority: 28.11.2024 ES 202430989
(71) Applicant: Carrocerias Hermanos Rega, S.L., 27775 Pereiro, O (Santa Maria) (Alfoz) Lugo (ES)
(72) Inventor: REGA PAZ, Eduardo, 27775 Pereiro, O (Santa Maria) (Alfoz) Lugo (ES); REGA, Diego, 27775 Pereiro, O (Santa Maria) (Alfoz) Lugo (ES)
(74) Representative: Ungria López, Javier

(57) **Abstract**

The present invention comprises several positioning devices (3) for stabilising the roof (2) of the body (1), and means for moving the roof vertically and thus placing it at the required height with final resting on the positioning devices. Each positioning device comprises a movable vertical structure (8) with height-adjustable displacement, formed by an elongated profile (8a) and a tilting skid (8b), which is coupled to the elongated profile (8a) below it by means of a horizontal articulated connection (9). The tilting skid (8b) includes a horizontal transverse shaft (10) which is configured to fit into one of several recesses (15a) delimited between teeth of a toothed rack (15) according to the required height of the roof (2). The positioning devices are arranged at least in the four vertical corner areas of the truck body (1), so that the roof (2) rests on ends of the various movable vertical structures (8).

## Description

### Object of the invention

The present invention relates to a lifting and positioning system for a liftable truck body roof comprising positioning devices for stabilising the roof of the body at the required height, and means for moving the roof vertically and thus placing it at the required height with final resting on the positioning devices, each of which includes a movable vertical structure with height-adjustable displacement, so that the roof rests on ends of the various movable vertical structures in the respective stable position.

### Technical field

The technical field of the present invention is that of industrial vehicles, and more specifically the structures of their bodies with the possibility of being able to vary the interior volume delimited by their body by varying the height of the body roof.

### Technical problem to be solved and background of the invention

In industrial freight transport vehicles, such as trucks for example, one of the most demanded body configuration options is that of including a liftable roof.

This feature allows the transporter to vary the interior volume of the body by varying the roof height, thus achieving different heights depending on the lifting of the roof. This variation in height makes it possible to transport a wide variety of goods with dimensions not suitable for transport in vehicles with a fixed roof that cannot be lifted, when necessary, due to the freight or load requirements.

To enable the roof of the body to be lifted, lowered and fixed at a desired height, the roof includes vertical profiles at various points which are guided within vertical guide profiles, which can be part of the body itself to make the lifting and lowering movement of the roof as stable as possible.

On the other hand, the lowering and lifting action of the roof is achieved by means of linear actuators, such as hydraulic cylinders, which are located in correspondence with at least the four vertical corners of the truck body structure or chassis.

The roof height can be positioned by hydraulic locking of the cylinders, with mechanical pins or with mechanical positioners.

### Description of the invention

In order to achieve the objectives and avoid the drawbacks in the previous paragraphs, the invention proposes a lifting and positioning system for a liftable truck body roof comprising several positioning devices for stabilising the roof of the body, and means for moving the roof vertically and thus placing it at the required height with final resting on the positioning devices.

Each positioning device comprises a movable vertical structure with height-adjustable displacement, formed by an elongated profile with a C-shaped cross-section and a tilting skid also with a C-shaped cross-section, which is coupled to the elongated profile by means of a horizontal articulated connection; wherein both the elongated profile and the tilting skid comprise central bodies and pairs of opposing parallel branches delimiting centred spaces; and wherein the tilting skid is coupled to a lower section of the elongated profile.

The tilting skid includes a horizontal transverse shaft which is configured to fit into one of several recesses delimited between teeth of a toothed rack according to the required height of the roof.

The movable vertical structure is guided within a hollow space delimited between a larger profile with a C-shaped cross-section and a smaller profile with a C-shaped cross-section; wherein both profiles comprise central bodies and pairs of opposing parallel branches; and wherein the branches of the smaller profile are attached to the central body of the larger profile.

The hollow space delimited between the two profiles houses the toothed rack which is fixed to the central body of the smaller profile; wherein the transverse shaft of the tilting skid of the movable vertical structure faces the teeth of said toothed rack in order to fit said transverse shaft into one of the several recesses between teeth of the toothed rack according to the required height of the roof; and wherein the toothed rack is fitted within a centred space delimited by the parallel branches and the central body of the movable structure.

An elongated piece, which includes a longitudinal flange parallel to the branches of said larger profile, is attached to one of the two opposing parallel branches of the larger profile of the movable vertical structure.

The movable vertical structure includes two upper side appendages and two lower side appendages adjacent to the horizontal articulated connection linking the elongated profile and the tilting skid; wherein both appendages are vertically aligned and attached externally to the two opposing parallel branches of the elongated profile.

The movable vertical structure also includes a seat base integral with the upper end of the elongated profile above the upper appendages that are attached to said seat base; wherein between said longitudinal flange and one of the two branches of the larger profile runs the assembly of the vertical guide profile and the vertical profile of the roof; and wherein this vertical profile rests on the seat base of the movable structure.

The central body of the larger profile includes a larger opening which is covered by a faceplate integrating a smaller opening, which faces the larger opening; wherein said faceplate is fixed to the larger profile; and wherein said smaller opening is configured to allow access to the tilting skid in order to manipulate the movable vertical structure to place it at the required height by fitting its transverse shaft into the corresponding recess between the teeth of the toothed rack.

The lifting and positioning system for the liftable truck body roof comprises at least four positioning devices arranged in correspondence with four vertical corner areas of the truck body; wherein the roof includes vertical profiles fitted and guided along recesses of vertical guide profiles located in at least the four vertical corner areas of the body.

The recesses of the vertical guide profiles are aligned with the movable vertical structures below the vertical guide profiles; wherein the roof is configured to move vertically by means of linear actuators such as hydraulic cylinders.

The rods of the linear actuators are coupled to lower ends of the vertical profiles of the roof by means of articulated connections; wherein lower ends of the vertical profiles of the roof are configured to rest on upper ends of the elongated profiles of the movable vertical structures according to the height of the roof.

To help better understand this specification, and as an integral part thereof, a series of figures is attached, in which the object of the invention is depicted in an illustrative and non-limiting manner.

### Brief description of the figures

**Figure** 1 shows a perspective view of a liftable roof forming part of a truck body that includes the lifting and positioning system of the liftable truck body roof.

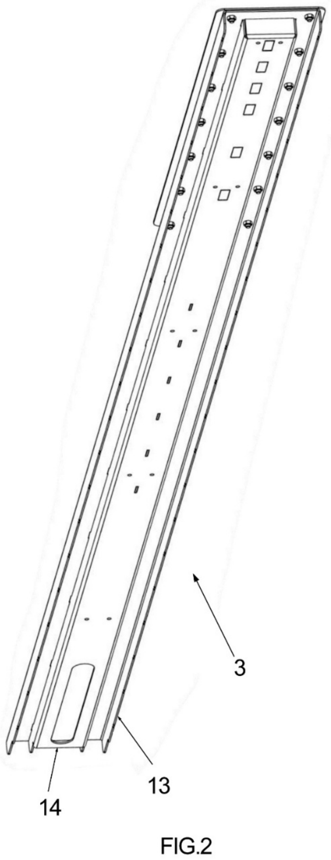

**Figure** 2 shows a perspective view of a positioning device forming part of the lifting and positioning system of the roof.

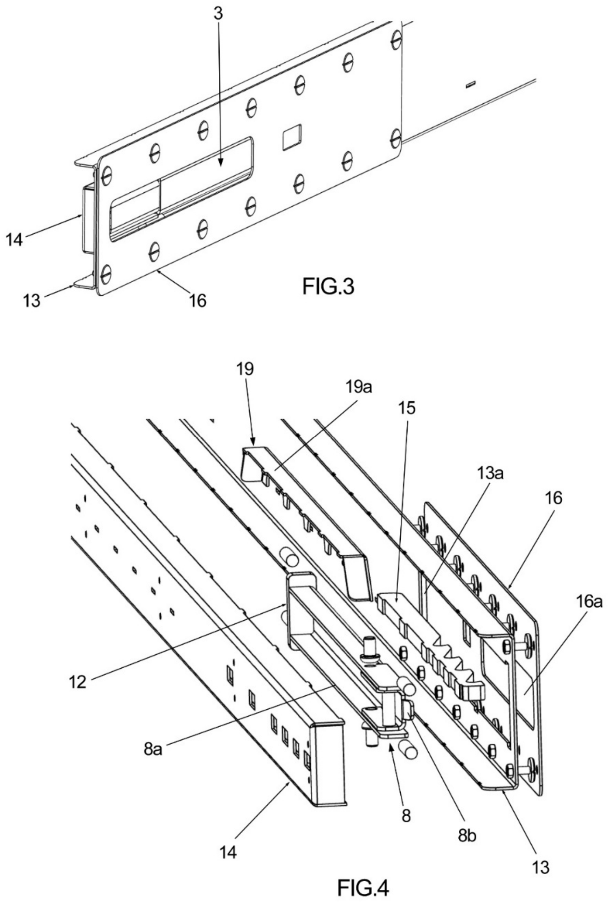

**Figure** 3 shows another perspective view of a part of the positioning device.
**Figure** 4 shows an exploded perspective view of the positioning device.

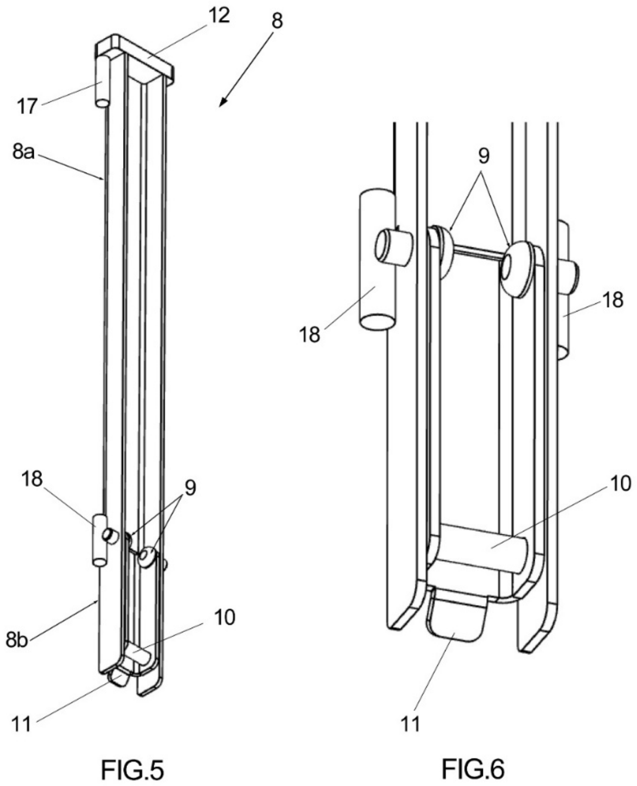

**Figure** 5 shows a perspective view of a part of the positioning device.
**Figure** 6 shows a perspective view of a part of what is shown in figure 5.
**Figure** 7 shows a longitudinal section view of the positioning device.
**Figure** 8 shows a perspective view of a vertical corner rear area of the truck body, where the positioning device is installed.

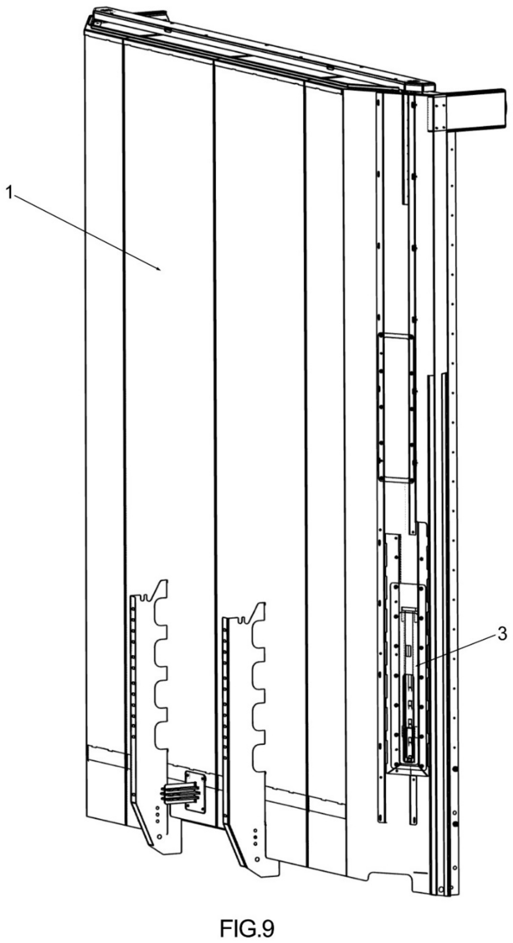

**Figure** 9 shows a perspective view of the front part of the truck body with two vertical corner areas where the respective positioning devices are installed.

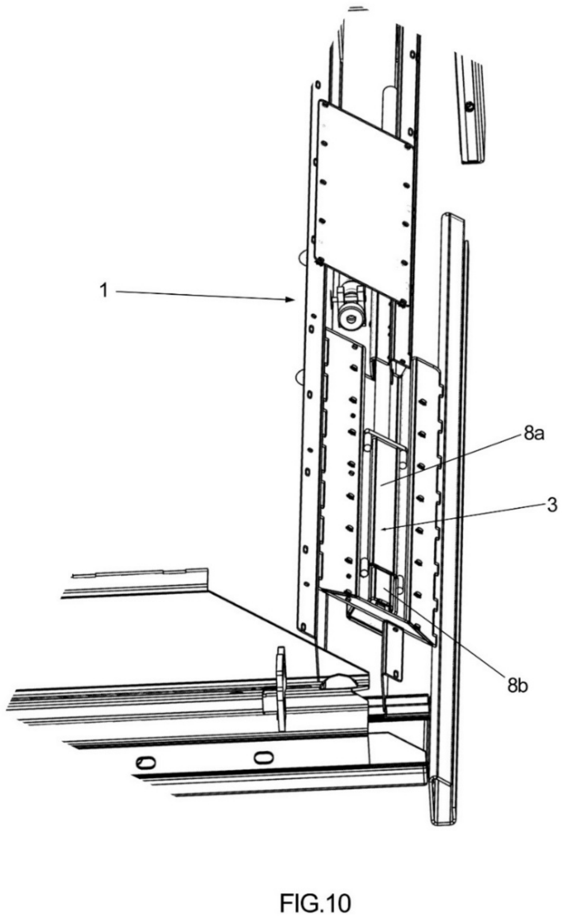

**Figure** 10 shows a perspective view of a vertical corner area of the front part of the truck body.

### Description of an exemplary embodiment of the invention

Considering the numbering used in the figures, the lifting and positioning system for a liftable truck body 1 roof 2 comprises positioning devices 3 for the stable placement and positioning of the truck body 1 roof at the required height, such that said positioning devices 3 are arranged in vertical alignments and at the same time are located in at least four vertical corner areas of the truck body 1 structure.

The roof 2 is an assembly independent from the rest of the truck body 1, such that said roof 2 includes at least four vertical profiles 4 arranged in the four corner areas of said roof 2, such that said four vertical profiles 4 are coupled and guided within vertical guide profiles 5 which may be part of the body 1 structure itself, or may be attached to said truck body 1 structure, in correspondence with the four vertical corner areas of the truck body 1.

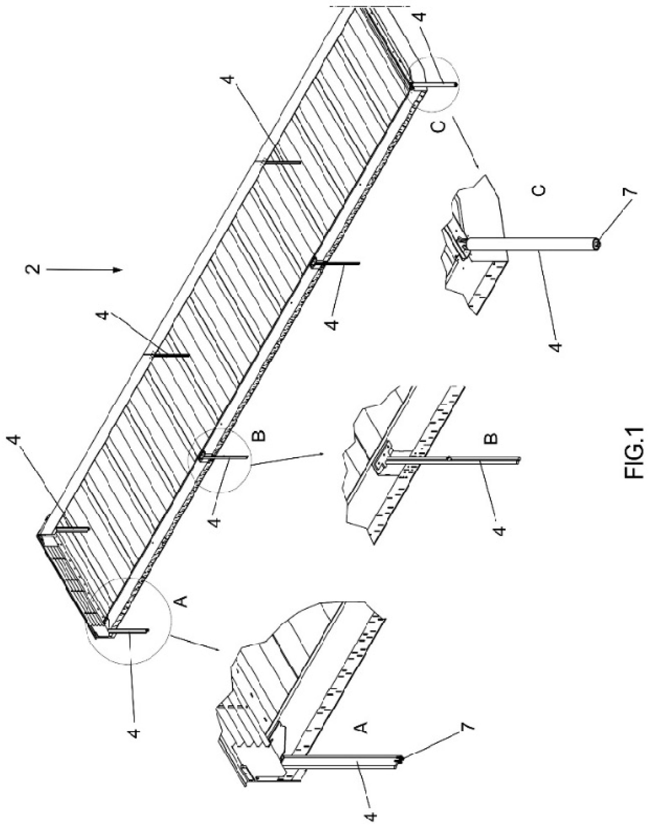

In the embodiment shown in figure 1, the roof 2 includes four additional vertical profiles 4 located along the two longitudinal edges of the roof 2, so that these four additional vertical profiles 4 are coupled into four other vertical guide profiles 5.

The raising and lowering of the roof 2 in order to position it where appropriate is carried out by means of linear actuators 6 fixed to the truck body structure, so that in one embodiment of the invention, the rods of said linear actuators 6 are connected to lower ends of the vertical profiles 4 by means of articulated connections 7.

In another embodiment of the invention, the rods of the linear actuators 6 could be connected to other points on the roof of the truck.

On the other hand, each of the positioning devices 3 comprises a movable vertical structure 8 formed by an elongated profile 8a with a C-shaped cross-section, and a tilting skid 8b also with a C-shaped cross-section, which is coupled to the elongated profile 8a by means of a horizontal articulated connection 9. Said movable vertical structure 8 can be moved vertically so that it can be stably placed at the required height according to the desired height of the truck roof 2. Both the elongated profile 8a and the C-shaped tilting skid 8b comprise a central body and two opposing parallel branches, delimiting a centred space.

The tilting skid 8b is fitted between the two branches of a lower section of the elongated profile 8a, so that this lower section lacks a portion of its central body.

The tilting skid 8b of the movable vertical structure 8 includes a horizontal transverse shaft 10, as well as a tab 11 extending outwardly below the transverse shaft 10; wherein said tab 11 is configured to be able to manipulate the tilting skid 8b by rotating it around the articulated connection 9 in order to place the assembly of the movable vertical structure 8 stably at the required height; wherein each stable position of the roof 2 is ensured by the support of a part of each of the lower ends of the vertical profiles 4 of said roof 2 on an upper seat base 12 integral with the elongated profile 8a of the movable vertical structure 8.

The assembly of the movable structure 8 is guided within a hollow space delimited between a larger profile 13 with a C-shaped cross-section and a smaller profile 14 also with a C-shaped cross-section; wherein both profiles 13, 14 comprise a central body and two opposing parallel branches; and wherein the branches of the smaller profile 14 are attached to the central body of the larger profile 13.

The hollow space delimited between the two profiles 13, 14 also houses a toothed rack 15 which is fixed to the central body of the smaller profile 14, so that the transverse shaft 10 of the tilting skid 8b of the movable vertical structure 8 faces the teeth of said toothed rack 15 in order to fit said transverse shaft 10 into one of the several recesses 15a between teeth of the toothed rack 15 according to the required height of the roof 2. Thus, the toothed rack 15 is fitted within the centred space delimited by the parallel branches and central bodies of the movable structure 8.

In line with the previous paragraph, the central body of the larger profile 13 includes a larger opening 13a which is covered by a faceplate 16 with a smaller opening 16a facing the larger opening 13a; wherein said faceplate 16 is fixed to the larger profile 13; and wherein through said smaller opening 16a the tilting skid 8b can be accessed to be able to manipulate the assembly of the movable structure 8 in order to place it at the required height by fitting its transverse shaft 10 into the corresponding recess 15a between the teeth of the toothed rack 15.

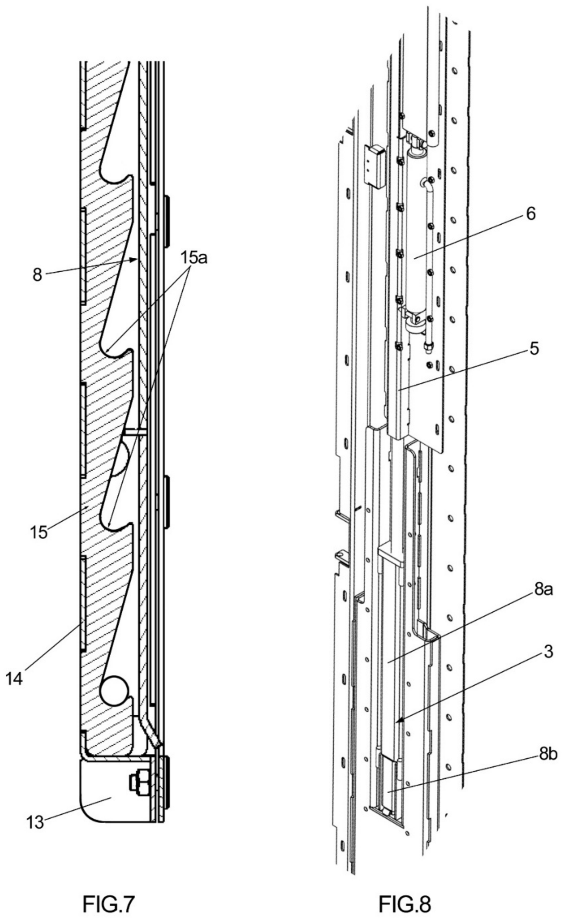

In figure 7, the transverse shaft 10 of the tilting skid 8b is fitted into the recess 15a which is placed at the lower end of the toothed rack 15, so that in this situation the truck roof will be placed in the lowest position possible. If, on the other hand, said transverse shaft 10 were fitted into the recess 15a placed at the upper end of the toothed rack 15, then the truck roof would be placed in the highest position possible.

The elongated profile 8a of the movable vertical structure 8 further includes two upper side appendages 17 attached to the seat base 12, and two lower side appendages 18 adjacent to the horizontal articulated connection 9 linking the elongated profile 8a and the tilting skid 8b; wherein both appendages 17, 18 are vertically aligned.

An elongated piece 19, which includes a longitudinal flange 19a parallel to the branches of said larger profile 13, is attached to one of the two opposing parallel branches of the larger profile 13 of the movable vertical structure 8, so that between said longitudinal flange 19a and one of the two branches of the larger profile 13 runs the assembly of the vertical guide profile 5 and the vertical profile 4 of the roof 2; wherein this vertical profile 4 rests on the respective assembly of the movable structure 8 and more specifically on its seat base 12 integral with the elongated profile 8a forming part of the movable structure 8.

The width of the seat base 12 and also the width at the pairs of upper side appendages 17 and the pairs of lower appendages 18 of each movable structure 8 are adjusted to the width delimited between the two parallel branches of the smaller profile 14. In this way, during the displacement of the movable vertical structure 8 along the hollow space delimited between the larger profile 13 and the smaller profile 14, said movable vertical structure 8 moves guided by the interior of the smaller profile 14.

The vertical guide profiles 5, wherein the vertical profiles 4 connected to the roof 2 fit and are guided, are arranged within the hollow spaces delimited between the larger profiles 13 and the smaller profiles 14. The guidance of the vertical profiles 4 of the roof 2 could even be incorporated directly into the very structure of the larger profiles 13 and/or smaller profiles 14.

Thus, the vertical guide profiles 5 serve only to guide the roof 2 in its lifting and lowering movement and thus fix the height of the roof 2 when they rest on the seat bases 12 of the movable vertical structures 8, which are used only to position the roof 2 in its lowering movement, finally positioning the roof at the required height.

In the case at hand, mechanical positioners with external actuation will be used. The way they act will be the focus of the invention.

The upper side appendages 17 and lower side appendages 18 of each movable vertical structure 8 serve as centring devices, since said movable vertical structure 8, in order to obtain the different heights of the roof 2, rises and lowers through the hollow space delimited between the larger profiles 13 and smaller profiles 14, although said hollow space could be incorporated directly into the chassis or structure of the truck body.

The articulated connection 9 between the elongated profile 8a and the tilting skid 8b comprises welded pins that allow the rotating movement.

## Claims

1. A positioning device for a liftable truck body roof, **characterised in that**:
- it comprises a movable vertical structure (8) with height-adjustable displacement, formed by an elongated profile (8a) with a C-shaped cross-section and a tilting skid (8b) also with a C-shaped cross-section, which is coupled to the elongated profile (8a) by means of a horizontal articulated connection (9); wherein both the elongated profile (8a) and the tilting skid (8b) comprise central bodies and pairs of opposing parallel branches delimiting centred spaces; and wherein the tilting skid (8b) is coupled to a lower section of the elongated profile (8a);
- the tilting skid (8b) includes a horizontal transverse shaft (10) which is configured to fit into one of several recesses (15a) delimited between teeth of a toothed rack (15);
- the movable vertical structure (8) is guided within a hollow space delimited between a larger profile (13) with a C-shaped cross-section and a smaller profile (14) with a C-shaped cross-section; wherein both profiles (13, 14) comprise central bodies and pairs of opposing parallel branches; and wherein the branches of the smaller profile (14) are attached to the central body of the larger profile (13);
- the hollow space delimited between the two profiles (13, 14) houses the toothed rack (15) which is fixed to the central body of the smaller profile (14); wherein the transverse shaft (10) of the tilting skid (8b) of the movable vertical structure (8) faces the teeth of said toothed rack (15) in order to fit said transverse shaft (10) into one of the several recesses (15a) between teeth of the toothed rack (15) according to the required height of the roof (2); and wherein the toothed rack (15) is fitted within a centred space delimited by the parallel branches and the central body of the movable structure (8).

2. The positioning device for a liftable truck body roof, according to claim 1, wherein an elongated piece (19), which includes a longitudinal flange (19a) parallel to the branches of said larger profile (13), is joined to one of the two opposing parallel branches of the larger profile (13) of the movable vertical structure (8).

3. The positioning device for a liftable truck body roof, according to claim 2, wherein:
- the movable vertical structure (8) includes two upper side appendages (17) and two lower side appendages (18) adjacent to the horizontal articulated connection (9) linking the elongated profile (8a) and the tilting skid (8b); wherein both appendages (17, 18) are vertically aligned and joined externally to the two opposing parallel branches of the elongated profile (8a);
- the movable vertical structure (8) also includes a seat base (12) integral with the upper end of the elongated profile (8a) above the upper appendages (17) that are attached to said seat base (12); wherein between said longitudinal flange (19a) and one of the two branches of the larger profile (13) runs the assembly of the vertical guide profile (5) and the vertical profile (4) of the roof (2); and wherein this vertical profile (4) rests on the seat base (12) of the movable structure (8).

4. The positioning device for a liftable truck body roof, according to claim 3, wherein the width of the seat base (12) as well as the width at the pairs of upper side appendages (17) and the pairs of lower appendages (18) of each movable structure (8) are adjusted to the width delimited between the two parallel branches of the smaller profile (14); wherein during the displacement of the movable vertical structure (8) along the hollow space delimited between the larger profile (13) and the smaller profile (14), said movable vertical structure (8) moves guided by the interior of the smaller profile (14).

5. The positioning device for a liftable truck body roof, according to any one of the preceding claims, wherein the central body of the larger profile (13) includes a larger opening (13a) which is covered by a faceplate (16) that integrates a smaller opening (16a), which faces the larger opening (13a); wherein said faceplate (16) is fixed to the larger profile (13); and wherein said smaller opening (16a) is configured to access the tilting skid (8b) in order to manipulate the movable vertical structure (8) to place it at the required height by fitting its transverse shaft (10) into the corresponding recess (15a) between the teeth of the toothed rack (15).

6. A lifting and positioning system for a liftable truck body roof, comprising at least four positioning devices (3) according to any one of the preceding claims, wherein the positioning devices (3) are arranged in correspondence with four vertical corner areas of the truck body (1); wherein the roof (2) includes vertical profiles (4) fitted and guided along recesses of vertical guide profiles (5) located in at least the four vertical corner areas of the body (1); wherein the recesses of the vertical guide profiles (5) are aligned with the movable vertical structures (8) below the vertical guide profiles (5); and wherein the roof (2) is configured to move vertically by means of linear actuators (6); **characterised in that** the rods of the linear actuators (6) are coupled to lower ends of the vertical profiles (4) of the roof (2) by means of articulated connections (7); wherein lower ends of the vertical profiles (4) of the roof (2) are configured to rest on upper ends of the elongated profiles (8a) of the movable vertical structures (8) according to the height of the roof (2).
